# EUROPEAN PATENT SPECIFICATION

(11) **EP 3 573 161 B1**
(45) Date of publication and mention of the grant of the patent: **21.04.2021**
(21) Application number: 17794206.7
(22) Date of filing: 18.01.2017
(51) Int. Cl.: H01M 8/18, H01M 8/0202, H01M 8/0247, H01M 8/0273

(54) **BIPOLAR PLATE, CELL FRAME, CELL STACK, AND REDOX FLOW CELL**
BIPOLARPLATTE, ZELLENRAHMEN, ZELLENSTAPEL UND REDOX-DURCHFLUSSBATTERIE
PLAQUE BIPOLAIRE, CHÂSSIS DE CELLULE, EMPILEMENT DE CELLULES ET BATTERIE À FLUX RÉDOX

(43) Date of publication of application: 27.11.2019
(73) Proprietor: Sumitomo Electric Industries, Ltd., Osaka-shi, Osaka 541-0041 (JP)
(72) Inventor: YAMAGUCHI, Hideyuki, Osaka-shi Osaka 554-0024 (JP); MOTOI, Kenji, Osaka-shi Osaka 554-0024 (JP)
(74) Representative: Hoffmann Eitle
(86) International application number: PCT/JP2017/001615
(87) International publication number: WO 2018/134928

(56) References cited:
- WO-A1-2016/072192
- JP-A- 2005 347 106
- JP-A- 2012 216 510
- JP-B1- 6 008 225
- US-A1- 2004 202 915
- NAM SOOHYUN ET AL: "Development of a fluoroelastomer/glass fiber composite flow frame for a vanadium redox flow battery (VRFB)", COMPOSITE STRUCTURES, ELSEVIER SCIENCE LTD, GB, vol. 145, 27 February 2016 (2016-02-27), pages 113-118, XP029475894, ISSN: 0263-8223, DOI: 10.1016/J.COMPSTRUCT.2016.02.052

## Description

### Technical Field

The present invention relates to a bipolar plate, a cell frame, a cell stack, and a redox flow battery.

### Background Art

Japanese Unexamined Patent Application Publication No. 2002-246061 (hereinafter PTL1) and Japanese Unexamined Patent Application Publication No. 2005-228622 (hereinafter PTL2) each describe a cell stack formed by stacking a plurality of cell frames, a plurality of positive electrodes, a plurality of membranes, and a plurality of negative electrodes. PTLs 1 and 2 also describe a redox flow battery that uses the cell stack. The cell frames include bipolar plates and frame bodies. The bipolar plates are disposed between the positive electrodes and the negative electrodes. The frame bodies are each provided at an outer periphery of a bipolar plate. In the cell stack, a single cell is formed by a positive electrode and a negative electrode disposed between bipolar plates of cell frames adjacent to each other such that a membrane is interposed between the positive electrode and the negative electrode. The redox flow battery is charged and discharged by circulating electrolytes in the cell where the electrodes are disposed.

Each of JP 6 008225 B1 and US 2004/202915 A1 form part of the state of the art relative to the present disclosure.

### Summary of Invention

According to a first aspect of the present invention, there is provided a bipolar plate as recited in claim 1 below.

According to a second aspect of the present invention, there is provided a cell frame as recited in claim 2 below.

According to a third aspect of the present invention, there is provided a cell stack as recited in claim 3 below.

According to a fourth aspect of the present invention, there is provided a redox flow battery as recited in claim 4 below.

### Brief Description of Drawings

[Fig. 1] Figure 1 illustrates an operating principle of a redox flow battery according to an embodiment.
[Fig. 2] Figure 2 is a schematic structural view of the redox flow battery according to the embodiment.
[Fig. 3] Figure 3 is a schematic structural view of a cell stack according to the embodiment.
[Fig. 4] Figure 4 is a schematic plan view of a cell frame according to the embodiment seen from a one surface side.
[Fig. 5] Figure 5 is a schematic plan view of a bipolar plate and a frame body included in the cell frame according to the embodiment.
[Fig. 6] Figure 6 is a schematic sectional view of part of the bipolar plate taken along line VI-VI illustrated in Fig. 5.
[Fig. 7] Figure 7 is a schematic sectional view of part of the cell frame taken along line VII-VII illustrated in Fig. 4.

### Description of Embodiments

### [Technical Problem]

Nowadays, there exists a need for further improvement of reliability and performance of the redox flow battery, which becomes a focus of attention as one of secondary batteries that stabilize output of renewable energy such as photovoltaic power and wind power.

Typically, the cell frames in each of which the frame body is provided around the bipolar plate are used for the redox flow battery. The cell frames are each structured by, for example, disposing the bipolar plate in an opening formed in the frame body, and a recess is formed in the frame body where the bipolar plate is provided. This opening (recess) typically has a shape corresponding to the bipolar plate. Electrodes are disposed in this recess, and a cell is structured by a space surrounded by the recess and a membrane. When the electrolytes flow through the cell, the electrolytes flow from one edge portion of the bipolar plate (electrode) toward the other edge portion of the bipolar plate facing the one edge portion in the cell.

When the cell frame is structured by disposing the bipolar plate in the opening of the frame body, an outer peripheral surface of an outer peripheral portion of the bipolar plate is disposed so as to be in contact with (in the proximity of) an inner peripheral surface of the frame body. When the electrolytes are caused to flow during operation of the redox flow battery, the bipolar plate may vibrate, and due to friction caused by this vibration, frictional heat may be generated at a contact surface of the bipolar plate with the frame body. Furthermore, due to the effect of the frictional heat at the contact surface of the bipolar plate with the frame body, breakage of the membrane and other problems can occur. Accordingly, from the viewpoint of reliability, it is desired that generation of frictional heat at the contact surface of the outer peripheral surface of the bipolar plate with the inner peripheral surface of the frame body caused by vibration of the bipolar plate be decreased so as to suppress damage to the membrane.

Thus, in order to prevent the outer peripheral surface of the bipolar plate from being in contact with the inner peripheral surface of the frame body for decreasing generation of frictional heat caused by vibration of the bipolar plate, it is thought that a gap is provided between the outer peripheral surface of the bipolar plate and the inner peripheral surface of the frame body. However, when the gap between the outer peripheral surface of the bipolar plate and the inner peripheral surface of the frame body is provided, parts of the electrolytes flow into this gap and a leakage channel of the electrolytes is formed. The electrolytes having flowed into the leakage channel are unlikely to be brought into contact with the electrodes, and accordingly, do not contribute to cell reaction. When the gap formed between the outer peripheral surface of the bipolar plate and the inner peripheral surface of the frame body is increased, a flow amount of the electrolytes flowing through the leakage channel increases. Thus, degradation of battery performance such as a decrease in the discharge capacity of the redox flow battery may occur. Furthermore, when flowing of the electrolytes is stopped during a standby of the redox flow battery, the charged electrolytes remain in the leakage channel, thereby the electrolytes generate heat due to self discharge. As the flow amount of the electrolytes flowing through the leakage channel increases, a heat value of the electrolytes due to self discharge increases. Thus, due to the effect of this heat, breakage of the membrane and other problems may occur.

Accordingly, one of objects of the present disclosure is to provide a bipolar plate, a cell frame, and a cell stack with which reliability and performance of a redox flow battery can be improved. Another object of the present disclosure is to provide a redox flow battery that is highly reliable and that exhibits good battery performance.

### [Advantageous Effects of the Present Disclosure]

According to the present disclosure, the bipolar plate, the cell frame, and the cell stack with which reliability and performance of the redox flow battery can be improved can be provided. Also, according to the present disclosure, the redox flow battery that is highly reliable and that exhibits good battery performance can be provided.

### [Description of an Embodiment According to the Present Invention]

First, content items of an embodiment according to the present invention are listed and described.
(1) A bipolar plate according to the embodiment is a bipolar plate in which an electrode of a redox flow battery is disposed. In a section perpendicular to a flat surface of the bipolar plate, a radius of curvature for each corner portion of an outer peripheral portion is from 0.1 to 4.0 mm.
   In the above-described bipolar plate, in the section (perpendicular section) perpendicular to the flat surface of the bipolar plate, the radius of curvature (corner R) of the corner portion of the outer peripheral portion is 0.1 mm or larger. Thus, when the cell frame is structured, the area of the outer peripheral surface of the bipolar plate in contact with the inner peripheral surface of the frame body is decreased, and accordingly, the contact area of the outer peripheral surface of the bipolar plate with the inner peripheral surface of the frame body is decreased. Thus, generation of frictional heat at the contact surface of the outer peripheral surface of the bipolar plate with the inner peripheral surface of the frame body caused by vibration of the bipolar plate can be decreased, and accordingly, damage to the membrane due to this heat can be suppressed.
   In the above-described bipolar plate, the corner portion of the outer peripheral portion of the bipolar plate has a round shape in the perpendicular section. Thus, a gap is formed at the position of the corner portion between the outer peripheral portion and the inner peripheral surface of the frame body. When the corner R of the outer peripheral portion is 4.0 mm or smaller in sectional view of the bipolar plate, the gap formed between the outer peripheral surface of the bipolar plate and the inner peripheral surface of the frame body can be decreased, and accordingly, an enlargement of the leakage channel can be suppressed. Thus, the flow amount of the electrolytes flowing through the leakage channel is small, and accordingly, a decrease in discharge capacity of the redox flow battery can be suppressed. In addition, since the flow amount of the electrolytes flowing through the leakage channel is small, the heat value due to self discharge of the electrolytes remaining in the leakage channel when the circulation of the electrolytes is stopped is small. Accordingly, damage to the membrane due to this heat can be suppressed. Thus, with the above-described bipolar plate, reliability and performance of the redox flow battery can be improved.
(2) A cell frame according to the embodiment includes the bipolar plate according to (1) described above and a frame body provided at an outer periphery of the bipolar plate.
   The above-described cell frame includes the above-described bipolar plate according to the embodiment. Thus, reliability and performance of the redox flow battery can be improved.
(3) A cell stack according to the embodiment includes the cell frame according to (2) described above.
   The above-described cell stack includes the above-described cell frame according to the embodiment. Thus, reliability and performance of the redox flow battery can be improved.
(4) A redox flow battery according to the embodiment includes the cell stack according to (3) described above.
   The above-described redox flow battery that includes the above-described cell stack is highly reliable and exhibits good battery performance.

### [Details of the Embodiment According to the Present Invention]

Specific examples of a bipolar plate, a cell frame, a cell stack, and a redox flow battery according to an embodiment of the present invention will be described below with reference to the drawings. In the drawings, like reference signs denote like or corresponding elements. However, the present invention is not limited to these examples. The scope of the present invention is indicated by Claims.

### <<RF Battery>>

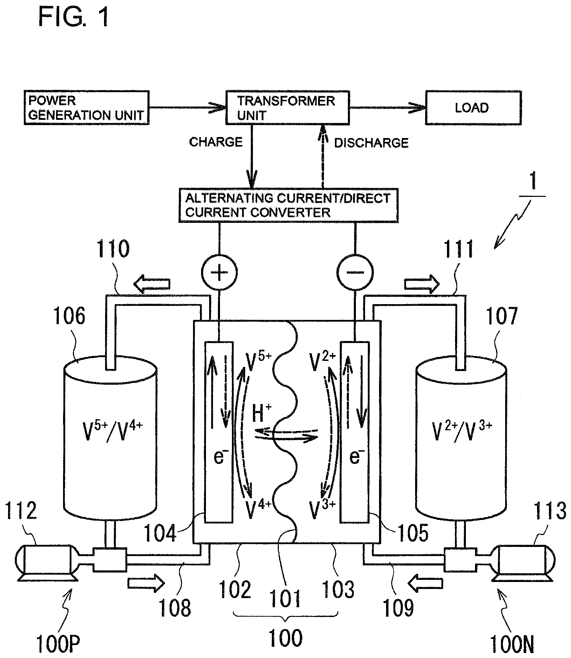

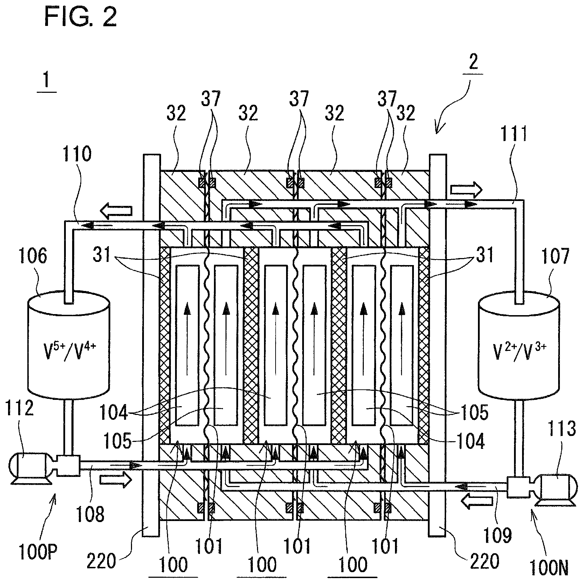

Referring to Figs. 1 to 3, examples of the redox flow battery (referred to as "RF battery" hereafter), the cell stack, and the cell frame according to the embodiment are described. An RF battery 1 illustrated in Figs. 1 and 2 uses, as a positive electrolyte and a negative electrolyte, electrolytes containing, as active materials, metal ions that undergo changes in valence by oxidation-reduction. The RF battery 1 is charged and discharged by using the difference between the redox potential of ions contained in the positive electrolyte and the redox potential of ions contained in the negative electrolyte. Here, as an example of the RF battery 1, as illustrated in Fig. 1, the case of a vanadium-based battery is described in which vanadium electrolytes containing V ions are used. The V ions serve as active materials of the positive electrolyte and the negative electrolyte. Solid-line arrows and broken-line arrows in one of cells 100 of Fig. 1 respectively indicate a charge reaction and a discharge reaction. The RF battery 1 is one of electrolyte circulation-type secondary batteries and is used for applications such as, for example, load leveling, compensation for instantaneous voltage drop, emergency power supply, and output leveling of renewable energy such as photovoltaic power and wind power, which are being widely introduced.

The RF battery 1 includes the cells 100 each of which is separated into a positive electrode cell 102 and a negative electrode cell 103 by a membrane 101. The membrane 101 allows hydrogen ions to permeate therethrough. The positive electrode cells 102, in each of which a positive electrode 104 is disposed, are connected through pipes 108 and 110 to a positive electrolyte tank 106 that stores the positive electrolyte. The pipe 108 is provided with a pump 112 that pumps the positive electrolyte to the positive electrode cells 102. These members 106, 108, 110, and 112 are included in a positive electrode circulation mechanism 100P that causes the positive electrolyte to circulate. Likewise, the negative electrode cells 103, in each of which a negative electrode 105 is disposed, are connected through pipes 109 and 111 to a negative electrolyte tank 107 that stores the negative electrolyte. The pipe 109 is provided with a pump 113 that pumps the negative electrolyte to the negative electrode cells 103. These members 107, 109, 111, and 113 are included in a negative electrode circulation mechanism 100N that causes the negative electrolyte to circulate. The electrolytes stored in the tanks 106 and 107 are circulated in the cells 100 (the positive electrode cells 102 and the negative electrode cells 103) by the pumps 112 and 113 when the RF battery 1 is charged and discharged. During a standby in which the RF battery 1 is neither charged nor discharged, the pumps 112 and 113 are stopped, and circulation is not performed.

### «Cell Stack»

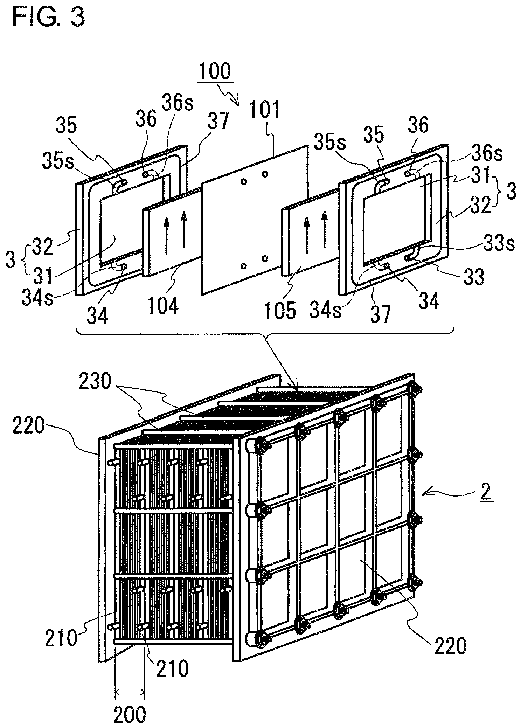

The cells 100 are typically formed in a structure referred to as a cell stack 2 illustrated in Figs. 2 and 3. The cell stack 2 is structured as follows: stacks referred to as sub-stacks 200 (see Fig. 3) are interposed between two end plates 220 disposed on both sides of the stacks, and the end plates 220 on both the sides are fastened by fastening mechanisms 230 (in the structure illustrated as an example in Fig. 3, a plurality of sub-stacks 200 are provided). The sub-stacks 200 are structured by stacking a plurality of cell frames 3, a plurality of positive electrodes 104, a plurality of membranes 101, a plurality of negative electrodes 105 and disposing supply/discharge plates 210 (see a lower view in Fig. 3; omitted from Fig. 2) at both the ends of the stack.

### «Cell Frames»

As illustrated in Figs. 2 and 3, the cell frames 3 each include a bipolar plate 31 and a frame body 32. The bipolar plate 31 is disposed between the positive electrode 104 and the negative electrode 105. The frame body 32 is provided at outer periphery of the bipolar plate 31. The positive electrode 104 is disposed on one surface side of the bipolar plate 31 such that the positive electrode 104 is in contact with the bipolar plate 31. The negative electrode 105 is disposed on the other surface side of the bipolar plate 31 such that the negative electrode 105 is in contact with the bipolar plate 31. In each of the sub-stacks 200 (the cell stacks 2), a single cell 100 is formed between the bipolar plates 31 of the cell frames 3 adjacent to each other.

The bipolar plate 31 is formed of, for example, plastic carbon or the like. The frame body 32 is formed of, for example, plastic such as polyvinyl chloride (PVC), polypropylene, polyethylene, fluororesin, or epoxy resin. The bipolar plate 31 can be formed by any of known methods such as, for example, injection molding, press molding, and vacuum forming.

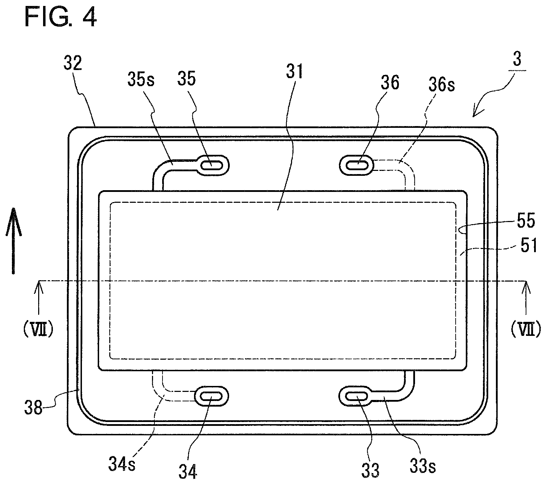

The electrolytes flow into and from the cells 100 through the supply/discharge plates 210 (see the lower view in Fig. 3), liquid supplying manifolds 33 and 34, liquid discharging manifolds 35 and 36, liquid supplying slits 33s and 34s, and liquid discharging slits 35s and 36s (also see Fig. 4). The liquid supplying manifolds 33 and 34 and the liquid discharging manifolds 35 and 36 penetrate through the frame bodies 32 illustrated in Fig. 3. The liquid supplying slits 33s and 34s and the liquid discharging slits 35s and 36s are formed in the frame bodies 32. In the case of each of the cell frames 3 (frame bodies 32) of the present example, the positive electrolyte is supplied to the positive electrode 104 through the liquid supplying manifold 33 provided in a lower portion of the frame body 32 and the liquid supplying slit 33s formed in the one surface side (front side of the page of the drawing) of the frame body 32 and discharged to the liquid discharging manifold 35 through the liquid discharging slit 35s formed in an upper portion of the frame body 32. Likewise, the negative electrolyte is supplied to the negative electrode 105 through the liquid supply manifold 34 provided in the lower portion of the frame body 32 and the liquid supplying slit 34s formed in the other surface side (rear side of the page of the drawing) of the frame body 32 and discharged to the liquid discharging manifold 36 through the liquid supplying slit 36s formed in the upper portion of the frame body 32. Regulators (not illustrated) may be formed in a lower edge portion and an upper edge portion of an inner side of the frame body 32, at which the bipolar plate 31 is provided, so as to extend along the edge portions. The regulators have the functions of scattering the electrolytes supplied from the liquid supplying slits 33s and 34s along lower edge portions of the electrodes and gathering the electrolytes discharged through upper edge portions of the electrodes in the liquid discharging slits 35s and 36s.

In the present example, the electrolytes are supplied from the lower side of the bipolar plate 31 and discharged from the upper side of the bipolar plate 31. The electrolytes flow from a lower edge portion to an upper edge portion of the bipolar plate 31. In Fig. 4, an arrow on the left side of the page generally indicates an electrolyte flowing direction of the electrolytes in the bipolar plate 31. The bipolar plate 31 may have a plurality of grooves (not illustrated) formed along the electrolyte flowing direction in its surfaces in contact with the electrodes. This can decrease flow resistance of the electrolytes, and accordingly, pressure losses of the electrolytes can be decreased. The sectional shape (the shape of a section perpendicular to the electrolyte flowing direction) of the grooves is not particularly limited. Examples of the sectional shape of the grooves include, for example, a rectangular shape, a triangular shape (a V shape), a trapezoidal shape, a semi-circular shape, and a semi-elliptical shape.

Furthermore, annular sealing members 37 (see Figs. 2 and 3) such as O rings or flat packings are disposed between the frame bodies 32 of the cell frames 3 so as to suppress leakage of the electrolytes from the cells 100. The frame bodies 32 each have seal grooves 38 (see Fig. 4) that allow the sealing members 37 to be disposed therein.

One of characteristics of each of the bipolar plates 31 according to the embodiment is that, in a section (perpendicular section) perpendicular to a flat surface of the bipolar plate 31, the radius of curvature (comer R) of corner portions of outer peripheral portion is from 0.1 to 4.0 mm. Hereafter, referring to Figs. 4 to 7, examples of structures of the bipolar plates 31 and the cell frame 3 according to the embodiment are described in detail.

### «Bipolar Plate»

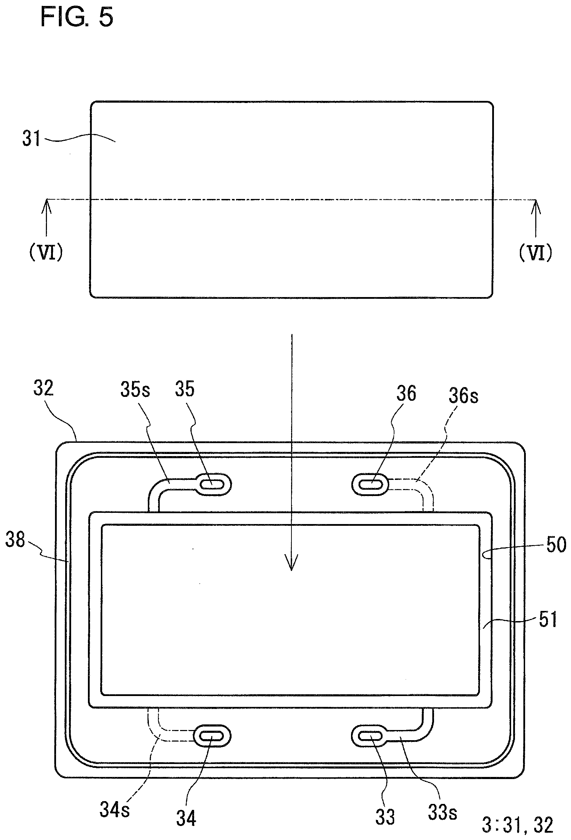

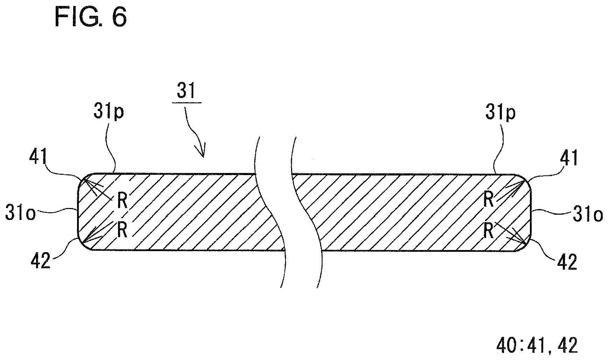

As illustrated in Fig. 5, the planar shape (the shape in plan view) of the bipolar plate 31 is rectangular. As illustrated in Fig. 6, in the perpendicular section (the section cut along the thickness direction of the bipolar plate 31), corner portions 40 of an outer peripheral portion 31p of the bipolar plate 31 have round shapes, and the radius of curvature (corner R) of the corner portions 40 of the outer peripheral portion 31p in the perpendicular section is from 0.1 to 4.0 mm. In the present example, corner portions 41 and corner portions 42 on both the one and the other surface sides of the outer peripheral portion 31p have round shapes, and the corners R of these are from 0.1 to 4.0 mm. The size of the bipolar plate 31 is, for example, as follows: the length in the perpendicular direction (up-down direction of the page of Fig. 5) is from 200 to 2000 mm, the length in the width direction (left-right direction of the page of Fig. 5) is from 200 to 2000 mm, and the thickness is from 3.0 to 10.0 mm.

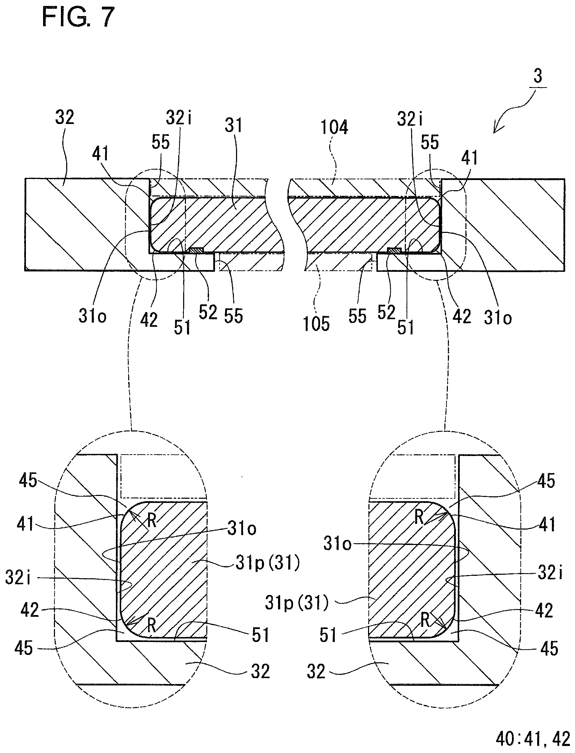

As illustrated in Fig. 4, the cell frame 3 is formed by providing the frame body 32 at the outer periphery of the bipolar plate 31. As illustrated in Fig. 5, the frame body 32 has an opening 50 thereinside in which the bipolar plate 31 is disposed. In the present example, the frame body 32 has a rectangular frame shape, and the opening 50 has a shape corresponding to the external shape of the bipolar plate 31. That is, the opening 50 has substantially the same shape (similar shape) as the planar shape of the bipolar plate 31. A step portion 51 in contact with the outer peripheral portion 31p of the bipolar plate 31 is formed at an inner peripheral portion of the frame body 32. As illustrated in Fig. 7, when the outer peripheral portion 31p of the bipolar plate 31 is disposed in the step portion 51, the bipolar plate 31 is supported by the frame body 32. The outer peripheral portion 31p of the bipolar plate 31 has a groove in the peripheral direction in a surface in contact with the step portion 51. A sealing member 52 is disposed in this groove. With this sealing member 52, movements of the electrolytes between the one surface side and the other surface side of the bipolar plate 31 can be suppressed.

When the cell frame 3 is structured by disposing the bipolar plate 31 in the opening 50 of the frame body 32, as illustrated in Fig. 4, recesses 55 are formed at portions further to the inside of the frame body 32 than the surfaces of the bipolar plate 31 and the inner peripheral surface of the frame body 32. As illustrated in Fig. 7, the recesses 55 are formed on both sides of the bipolar plate 31, and the positive electrode 104 and the negative electrode 105 are disposed in the respective recesses 55. The electrodes 104 and 105 have the sizes substantially the same as the sizes of the respective recesses 55. In the case of the cell frame 3 illustrated in Fig. 4, the shape of one of the recesses 55 provided on the one surface side is substantially the same as the planar shape of the bipolar plate 31, and the shape of the positive electrode 104 (see Fig. 7) disposed in this recess 55 is substantially the same as the planar shape of the bipolar plate 31. The cell stack 2 (see Fig. 3) is structured by arranging the electrodes 104 and 105 at the cell frames 3 and stacking the cell frames 3 with the membranes 101 interposed therebetween.

When the cell frame 3 (see Fig. 4) is structured, as illustrated in Fig. 7, an outer peripheral surface 31o of the bipolar plate 31 (outer peripheral portion 31p) faces and in contact with (in the proximity of) an inner peripheral surface 32i of the frame body 32. Positions of the outer peripheral surface 31o of the outer peripheral portion 31p at the corner portions 41 and 42 are not in contact with the inner peripheral surface 32i of the frame body 32, and gaps 45 are formed between the outer peripheral surface 31o and the inner peripheral surface 32i of the frame body 32. As the corners R of the outer peripheral portion 31p increase, the gaps 45 increase. The gaps 45 formed along side edge portions of the bipolar plate 31 can be leakage channels of the electrolytes. As the length of linear portions (flat surface portions other than curved surfaces of the corners R) other than the corner portions 41 and 42 out of the outer peripheral surface 31o decreases, the area by which the outer peripheral surface 31o is in contact with the inner peripheral surface 32i of the frame body 32 decreases. From the viewpoint of decreasing generation of frictional heat caused by vibration of the bipolar plate 31, the ratio of the length of the linear portions to the thickness of the bipolar plate 31 (length of the linear portions/thickness of the bipolar plate) can be set to, for example, 0.99 or smaller, and further, 0.9 or smaller.

### {Operational Effects}

The bipolar plate 31 according to the embodiment produces the following operational effects.

The corner portions 40 of the outer peripheral portion 31p of the bipolar plate 31 in the perpendicular section have round shapes, and the corners R of the outer peripheral portion 31p are 0.1 mm or larger in the perpendicular section. This can decrease, when the cell frame 3 is structured, the contact area of the outer peripheral surface 31o of the bipolar plate 31 with the inner peripheral surface 32i of the frame body 32. Thus, generation of frictional heat at a contact surface of the outer peripheral surface 31o of the bipolar plate 31 with the inner peripheral surface 32i of the frame body 32 caused by vibration of the bipolar plate 31 can be decreased, and accordingly, damage to the membrane 101 due to this heat can be suppressed. As the contact area of the outer peripheral surface 31o of the bipolar plate 31 with the inner peripheral surface 32i of the frame body 32 is decreased, generation of the heat caused by vibration of the bipolar plate 31 can be decreased. Accordingly, it is preferable that the above-described corners R be, for example, 0.2 mm or larger. The ratio of the corners R to the thickness of the bipolar plate 31 (corners R/thickness of the bipolar plate 31) can be, for example, 0.01 or larger, and further, 0.1 or larger.

Furthermore, when the corners R of the outer peripheral portion 31p are 4.0 mm or smaller, the gaps 45 formed between the outer peripheral surface 31o of the bipolar plate 31 and the inner peripheral surface 32i of the frame body 32 can be decreased, and accordingly, an enlargement of the leakage channels can be suppressed. Thus, a flow amount of the electrolytes flowing through the leakage channels is small, and accordingly, a decrease in discharge capacity of the RF battery can be suppressed. In addition, since the flow amount of the electrolytes flowing through the leakage channels is small, a heat value due to self discharge of the electrolytes remaining in the leakage channels when the circulation of the electrolytes is stopped is small. Accordingly, damage to the membrane due to this heat can be suppressed. As the gaps 45 at the corners R of the outer peripheral portion 31p decrease, the flow amount of the electrolytes flowing through the leakage channels can be decreased. Accordingly, it is preferable that the corners R be, for example, 0.5 mm or smaller.

### [Variation]

The sizes of the corners R at the corner portions 41 on the one surface side and the corner portions 42 on the other surface side may be different from each other in the bipolar plate 31 (see Figs. 6 and 7) according to the embodiment. For example, the corners R on the other surface side can be greater than the corners R on the one surface side. In the case of the present example, as illustrated in Fig. 7, the other surface side of the outer peripheral portion 31p is in surface contact with the step portion 51 of the frame body 32. Accordingly, heat can also be generated on the other surface side of the outer peripheral portion 31p due to friction caused by vibration of the bipolar plate 31. When the corners R are larger on the other surface side than on the one surface side, the contact area of the outer peripheral portion 31p with the step portion 51 can be decreased. Accordingly, generation of frictional heat between the outer peripheral portion 31p and the step portion 51 is easily decreased.

### [First Example]

The bipolar plate having a rectangular planar shape was prepared. The bipolar plate has the following size (external dimensions): 200 mm in length × 200 mm in width × 10.0 mm in thickness. Here, as listed in Table 1, a plurality of bipolar plates were prepared. The plurality of bipolar plates are different in radius of curvature (corner R) at the corner portions of the outer peripheral portion in the section of the bipolar plate perpendicular to the flat surface (see Fig. 6). Cell frames (see Fig. 4) were produced with the bipolar plates. These cell frames were assembled into a plurality of RF batteries (testing samples A to F). Reliability and battery performance of each of the testing samples were evaluated.

The reliability was evaluated by performing charge and discharge testing on the testing samples A to F, then disassembling the RF batteries, removing the membranes, and checking the degree of damage to the membranes. The charge and discharge testing were performed under the following conditions. That is, discharge end voltage: 1 V, charge end voltage: 1.6 V, current: 120 mA/cm², and 300 cycles. When there was no damage, it was given a grade of "A", when there was small damage that did not cause a problem in use, it was given a grade of "B", and when the membranes break, it was given a grade of "C". The results are listed in Table 1.

The battery performance was evaluated in accordance with current efficiency when the above-described charge and discharge testing was performed with the testing samples A to F. Regarding the current efficiency, a charge and discharge curve was drawn in accordance with the charge and discharge testing. The current efficiency at a third cycle from the charge and discharge curve (current efficiency (%) = (discharge time/charge time) × 100) was obtained. The results are listed in Table 1. As the current efficiency decreases, discharge capacity decreases.

**[Table 1]**

| **Testing sample** | **Bipolar plate (outer peripheral portion)** | **Presence/ absence of damage to membrane** | **Current efficiency (%)** |
|---|---|---|---|
| | **Radius of curvature at corner portion (mm)** | | |
| A | 0.0 | C | 98 |
| B | 0.1 | B | 98 |
| C | 0.2 | A | 98 |
| D | 0.5 | A | 98 |
| E | 4.0 | A | 96 |
| F | 4.5 | A | 69 |

From Table 1, it can be understood that when the corners R of the outer peripheral portion are from 0.1 to 0.4 mm in the perpendicular section of the bipolar plate, damage to the membrane can be suppressed, and in particular, when these corners R are 0.2 mm or larger, damage to the membrane can be effectively suppressed. Furthermore, when comparing current efficiency of the testing samples, the current efficiency of the testing sample F is lower than the current efficiency of the testing sample B. When calculating discharge capacity in accordance with the current efficiency, the discharge capacity of the testing sample F is lower than the discharge capacity of the testing sample B by about 35%. Furthermore, the discharge capacities of the other testing samples C, D, and E are lower than the discharge capacity of the testing sample B by about 1.0%, 1.5%, and 3.0%, respectively. As the corners R of the outer peripheral portion increase, cell resistance increases. This causes the discharge capacity to decrease. Thus, discharge capacity tends to decrease more than a percentage of a decrease in current efficiency.

From the results of the first example, it has been verified that, when the corners R of the outer peripheral portion of the bipolar plate are from 0.1 to 0.4 mm, breakage and other problems are difficult to occur in the membrane, and accordingly, the decrease in discharge capacity of the RF battery can be suppressed. Furthermore, from the viewpoint of suppressing the decrease in discharge capacity of the RF battery, it is thought that the corners R of the outer peripheral portion are preferably 0.5 mm or smaller. Reference Signs List

- 1: redox flow battery (RF battery)
- 2: cell stack
- 3: cell frame
- 31: bipolar plate
- 31p: outer peripheral portion
- 31o: outer peripheral surface
- 32: frame body
- 32i: inner peripheral surface
- 33, 34: liquid supplying manifold
- 35, 36: liquid discharging manifold
- 33s, 34s: liquid supplying slit
- 35s, 36s: liquid discharging slit
- 37: sealing member
- 38: seal groove
- 40, 41, 42: corner portion
- 45: gap (leakage channel)
- 50: opening
- 51: step portion
- 52: sealing member
- 55: recess
- 100: cell
- 101: membrane
- 102: positive electrode cell
- 103: negative electrode cell
- 100P: positive electrode circulation mechanism
- 100N: negative electrode circulation mechanism
- 104: positive electrode
- 105: negative electrode
- 106: positive electrolyte tank
- 107: negative electrolyte tank
- 108, 109, 110, 111: pipe
- 112, 113: pump
- 200: sub-stack
- 210: supply/discharge plate
- 220: end plate
- 230: fastening mechanism

## Claims

1. A bipolar plate in which an electrode of a redox flow battery is disposed,
wherein, in a section perpendicular to a flat surface of the bipolar plate, a radius of curvature for each corner portion of an outer peripheral portion is from 0.1 to 4.0 mm.

2. A cell frame comprising:
the bipolar plate according to Claim 1; and
a frame body provided at an outer periphery of the bipolar plate.

3. A cell stack comprising:
the cell frame according to Claim 2.

4. A redox flow battery comprising:
the cell stack according to Claim 3.

## Patentansprüche

1. Bipolare Platte, in der eine Elektrode einer Redox-Durchflussbatterie angeordnet ist,
wobei in einem Abschnitt senkrecht zu einer flachen Oberfläche der bipolaren Platte ein Krümmungsradius für jeden Eckabschnitt eines äußeren peripheren Abschnitts 0,1 bis 4,0 mm ist.

2. Zellenrahmen, umfassend
die bipolare Platte nach Anspruch 1; und
einen Rahmenkörper, der an einer äußeren Peripherie der bipolaren Platte bereitgestellt ist.

3. Zellenstapel, umfassend:
den Zellenrahmen nach Anspruch 2.

4. Redox-Durchflussbatterie, umfassend:
den Zellenstapel nach Anspruch 3.

## Revendications

1. Plaque bipolaire dans laquelle une électrode d'une batterie à flux rédox est disposée,
dans laquelle, dans une section perpendiculaire à une surface plate de la plaque bipolaire, un rayon de courbure pour chaque partie de coin d'une partie périphérique extérieure est de 0,1 à 4,0 mm.

2. Châssis de cellule comprenant :
la plaque bipolaire selon la revendication 1; et
un corps de châssis fourni au niveau d'une périphérie extérieure de la plaque bipolaire.

3. Empilement de cellules comprenant :
le châssis de cellule selon la revendication 2.

4. Batterie à flux rédox comprenant :
l'empilement de cellules selon la revendication 3.
